# EUROPEAN PATENT APPLICATION

(11) **EP 4 113 770 A1**
(43) Date of publication of application: **04.01.2023**
(21) Application number: 22180068.3
(22) Date of filing: 21.06.2022
(51) Int. Cl.: H02G 11/00, B60L 53/31

(54) **CABLE HANDLING ARRANGEMENT**

(30) Priority: 28.06.2021 SE 2150824; 03.09.2021 SE 2151106
(71) Applicant: CTEK Sweden AB, 776 70 Vikmanshyttan (SE)
(72) Inventor: SVEDLUND, Jerry, 792 37 MORA (SE); AHLGREN, Lars-Olov, 732 73 FELLINGSBRO (SE); HJORT, Mattias, 776 36 HEDEMORA (SE); FÄLT, Tommy, 77670 VIKMANSHYTTAN (SE)
(74) Representative: Brann AB

(57) **Abstract**

The present disclosure relates to a cable handling arrangement (100) configured to extend and retract a charging cable (150) for a vehicle from and to a charger, the handling arrangement (100) comprising a charging cable (100) configured to conduct charging current from a charger to the vehicle, a first resilient element (130) attached to the cable (150) at a first attachment point (134), wherein a first cable loop (151) of the cable (150) is formed between an anchor attachment point (140) and the first attachment point (134), a second resilient element (120) attached to the cable (150) at a second attachment point (124), wherein a second cable loop (152) of the cable (150) is formed between the first attachment point (134) and second attachment point (124).

## Description

### TECHNICAL FIELD

The present invention relates to a cable handling arrangement. In particular, the invention relates to a cable handling arrangement configured to extend from a supply unit and retract to the supply unit, a charging cable for a vehicle. The supply unit may e.g., be an Electric Vehicle Supply Equipment, EVSE, or a charger.

### BACKGROUND

Vehicles today, typically electric or hybrid vehicles, needs charging at high currents to minimize the charging time.

At high charging currents, e.g., 32 Ampere or higher, the area of the cable cross section needs to be increased, to avoid excessive heat being generated in the charging cable.

To ensure a safe work environment as well as easy access to auxiliary power to the vehicle, the charging cables needs to be stored when not in use.

Document WO2013069480A1 shows a cable handling device, where the charging cable is winded up using a reel. There are more examples of cable handling devices, which serves the purpose of a minimal storage, easy access and guided return of the cable.

A drawback with conventional solutions is that the increased charging cable cross section results in relatively heavy cables, that wears when they are handled, e.g., when they are dragged over the ground. This potentially results in a reduced life span of the charging cable.

A further problem is that handling of the heavy charging cables puts strain on a user's body.

Another problem is the bending radius of cables with a big cross section, which results in a comparably large volumes for conventional cables reels and such.

Thus, there is a need for an improved cable handling arrangement.

### OBJECTS OF THE INVENTION

An objective of embodiments of the present invention is to provide a solution which mitigates or solves the drawbacks described above.

### SUMMARY

The above objective is achieved by the subject matter described herein. Further advantageous implementation forms of the invention are described herein.

According to a first aspect of the invention the object of the invention is achieved by a cable handling arrangement configured to extend and retract a charging cable for a vehicle from and to a charger, the handling arrangement comprising a charging cable configured to conduct charging current from a charger to the vehicle, a first resilient element attached to the cable at a first attachment point, wherein a first cable loop of the cable is formed between an anchor attachment point and the first attachment point, a second resilient element attached to the cable at a second attachment point, wherein a second cable loop of the cable is formed between the first attachment point and second attachment point.

The advantage of this first aspect includes at least that wear on the charging cable is reduced. A further advantage is that it provides more ergonomic handling of the charging cable for a user. The guided returned of the charging cable to its storage position is another advantage that will reduce the risks that follows with having a charging cable dragging on the ground.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

**Fig. 1** illustrates a cable handling arrangement according to one or more embodiments of the present disclosure.
**Fig. 2** illustrates a cable handling arrangement using an additional resilient element/s according to one or more embodiments of the present disclosure.
**Fig. 3** illustrates a charging system according to one or more embodiments of the present application.
**Fig. 4** illustrates a cable handling arrangement comprising one single line member, one or more weights and oner or more guide members according to one or more embodiments of the present disclosure.
**Fig. 5** illustrates a cable handling arrangement 100 having one or more line members and one or more weights and one or more guide members, according to one or more embodiments of the present disclosure.
**Fig. 6** illustrates a cable handling arrangement comprising line members, weights and guide members according to one or more embodiments of the present disclosure.
**Fig. 7A-B** illustrates the cable handling arrangement further comprising a gear unit according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

The present disclosure relates to a cable handling system. In particular, handling a charging cable when charging a vehicle, such as a hybrid or electrical vehicle. This typically involves moving an end of the charging cable, provided with a charging gun, from the charger or charging station to the vehicle, to connect and initiate charging.

The present disclosure solves the problems of cable wear and strain on the user's body, by providing coupled and/or serially coupled resilient elements, e.g., implemented using weights and pulleys, spring balancers or springs, attached to different attachment points on the charging cable, and to an anchor point carrying part of the weight of the charging cable.

This allows a user to extend and retract the charging cable from a charging station without dragging the cable on the ground. Further an anchor point of the charging cable will carry at least part, e.g., half, of the weight of the cable, thereby reducing strain on a user's body when handling the charging cable.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

The terms "resilient element", "resilient unit", "tensioning element", "tensioning unit" is used herein interchangeably.

The term "resilient element", used herein, denotes a unit or element configured to be connected at two points and to extend and retract between those two points in response to being subjected to a varying pulling/dragging force. The "resilient element" typically comprises connection arrangements, e.g., clamps.

In one example the resilient element is a spring balancer provided with a housing comprising one or more strings/wires, and is configured to allow one or more strings/wires to extend and retract between the two points. In other words, the housing may be attached to an anchor point and one (proximal) end of the balancer-string/wire comprised by the housing is attached to an attachment point of a charging cable. When the attachment point is subjected to a pulling/dragging force, the resilient element extends the one or more strings/wires, and when the pulling/dragging force is reduced/relaxed, the resilient element retracts the one or more strings/wires.

In one example the resilient element is a spring, and is configured to extend and retract between the two points. In other words, the spring is typically attached to an anchor point at one end and one end and to an attachment point of a charging cable at the other end.

In one example the resilient element comprises one or more line members and one or more weights, and is configured to extend and retract between the two points. Optionally, the the resilient element further comprises one or more guide members, e.g., pulleys. In other words, the wire/rope may e.g., be attached to an anchor point at one end and to an attachment point of a charging cable at the other end, the rope being threaded/running via the one or more pulleys.

The term "line member", used herein, denotes a line, chain, string or wire configured to transfer a force along the line member. E.g., a wire transferring a pulling force from a charging cable, via a pulley to an anchor point.

The term "guide member" denotes a member configured to receive and/or guide and/or wind a line member in a particular direction or to a particular position, e.g., a pulley or a drum.

The term "charger" or "supply unit" denotes a unit configured to provide a vehicle with electric power. Examples of a "charger" or "supply unit" is an Electric Vehicle Supply Equipment, EVSE, or a battery charger.

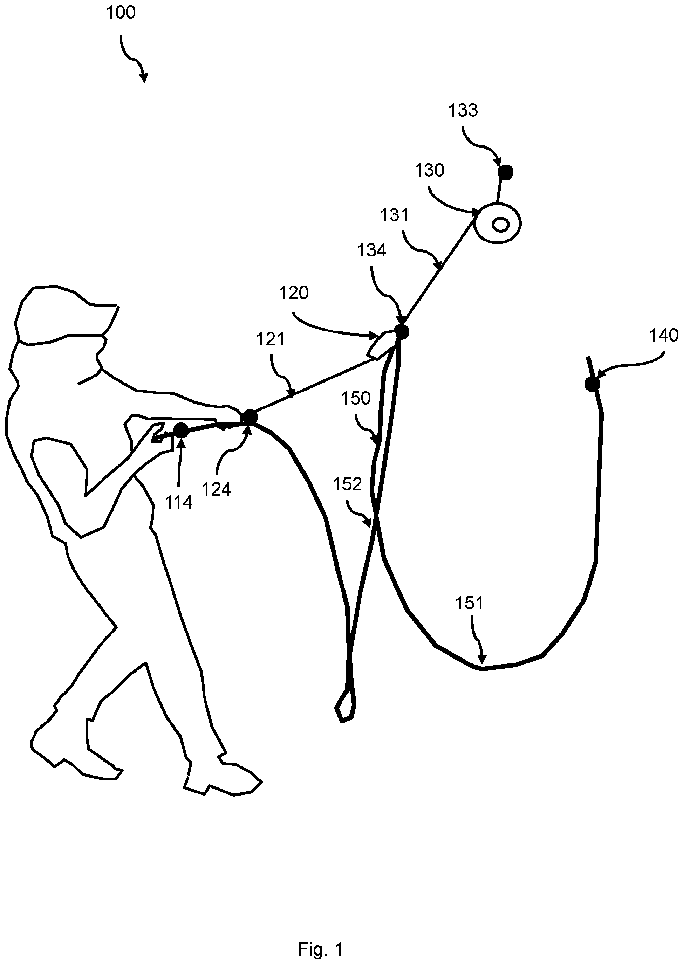

**Fig. 1** illustrates a cable handling arrangement 100 according to one or more embodiments of the present disclosure. As can be seen from Fig.1, the user may use the cable handling arrangement 100 to extend the charging cable 150 from the anchor point 140 of the cable, normally located at the charger and/or charging current source, by holding the charging cable and moving away from the anchor point 140. Further, the user may retract the charging cable to/towards the anchor point 140 of the cable, by moving towards the anchor point 140. The charging cable 150 of the cable handling arrangement 100 is typically provided with at least an anchor attachment point 140, a first attachment point 134 and a second attachment point 124. The attachment points typically comprise clamps or any other suitable arrangement for attaching to the charging cable 150. The cable handling arrangement 100 further comprises at least two resilient elements, e.g., weights/pulleys, spring balancers or springs, 120, 130. The cable handling arrangement 100 comprises a first resilient element 130, which is physically connected/coupled to an anchor point 133, e.g., located at the charging station comprising the charger, and to the first attachment point 134. The first resilient element 130 may e.g., be connected to the anchor point 133 by connection arrangements, e.g., clamps and/or a wire. The first resilient element 130 may e.g., be connected to the first attachment point 134 by a string/wire extending from the resilient element and/or connection arrangements, such as clamps.

A first cable loop 151 of the cable 150 is formed between the anchor attachment point 140 and the first attachment point 134.

The cable handling arrangement 100 also comprises a second resilient element 120, which is physically connected/coupled to the first attachment point 134 and to the second attachment point 124. The second resilient element 120 may e.g., be connected to the first attachment point 134 by connection arrangements, such as clamps and/or a wire. The second resilient element 120 may e.g., be connected to the second attachment point 124 by a string/wire extending from the resilient element and/or connection arrangements, such as clamps.

A second cable loop 152 of the cable 150 is thereby formed between the first attachment point 134 and second attachment point 124.

The first resilient element 130 and the second resilient element 120 are in this embodiment configured to be serially coupled to each other. In other words, both resilient elements, e.g., 120, 130 are simultaneously connected to the same attachment point 134.

Typically, the charging cable is electrically coupled to the charger at a first end 140, and at the opposite end 114 provided with, and electrically coupled to, a charging gun.

In one example, a charging gun may be a SAE J1772 (IEC Type 1) connector.

In one embodiment, the first resilient element 130 and the second resilient element 120 is configured with the same balance weight rating. In this context, balance weight rating refers to the weight range that the resilient element is configured to carry and/or balance.

In one embodiment, the first resilient element 130 is configured with a greater balance weight rating than the second resilient element 120. In one embodiment, the first resilient element 130 is configured with a balance weight rating identical to a balance weight rating of the second resilient element 120. In one embodiment, the second resilient element 120 is configured with a greater balance weight rating than the first resilient element 130.

In one embodiment, the first resilient element 130 is configured to balance a total weight of the first cable loop 151 and the second cable loop 152, and the second resilient element 120 is configured to balance the weight of the second cable loop 152.

In one embodiment, the first resilient element 130 is configured with a lower balance weight rating than the second resilient element 120.

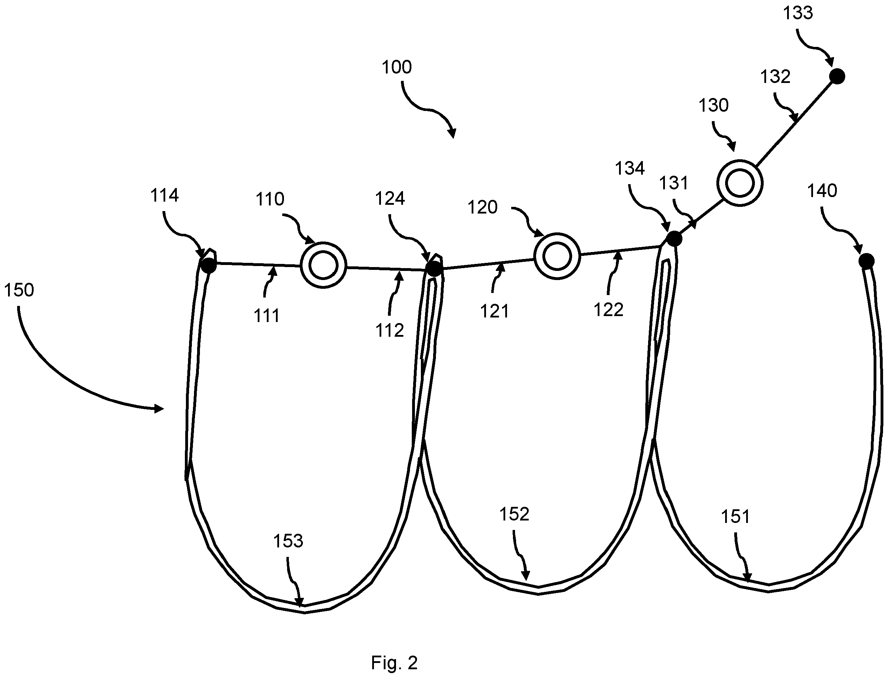

**Fig. 2** illustrates a cable handling arrangement using an additional resilient element/elements 110 according to one or more embodiments of the present disclosure. As can be seen from Fig. 2, this embodiment includes all the features described in relation to Fig. 1. The connection arrangements 112, 122, 132 are shown as well as the string/wire 111, 121, 131 extending from the resilient element.

In addition, the cable handling arrangement 100 further comprise one or more additional resilient elements 110. The first resilient element 130, the second resilient element 120 and the one or more additional resilient elements 110 may further be serially coupled to each other.

A third cable loop 153 of the cable 150 is thereby formed between the second attachment point 124 and a third attachment point 114.

In Fig. 2, a single additional resilient element 110 is shown, but it is understood that the present disclosure may be extended to any number of resilient elements, each with a cable loop formed between the attachment points. The resilient elements may further be serially coupled.

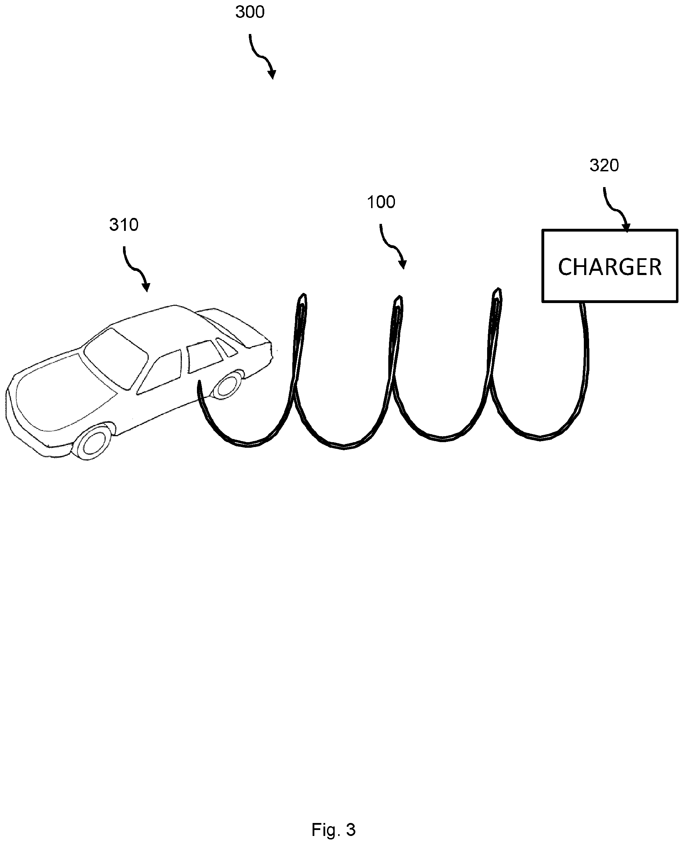

**Fig. 3** illustrates a charging system 300 according to one or more embodiments of the present application. The charging system 300 comprises a vehicle 310, the cable handling arrangement 100 described herein and a charger 320, e.g., a charger in a charging station configured to electrically charge the vehicle 310.

The charger 320 is electrically coupled to the vehicle 310, e.g., via the cable handling arrangement 100 and/or connectors and/or clamps to the battery 130 of the vehicle.

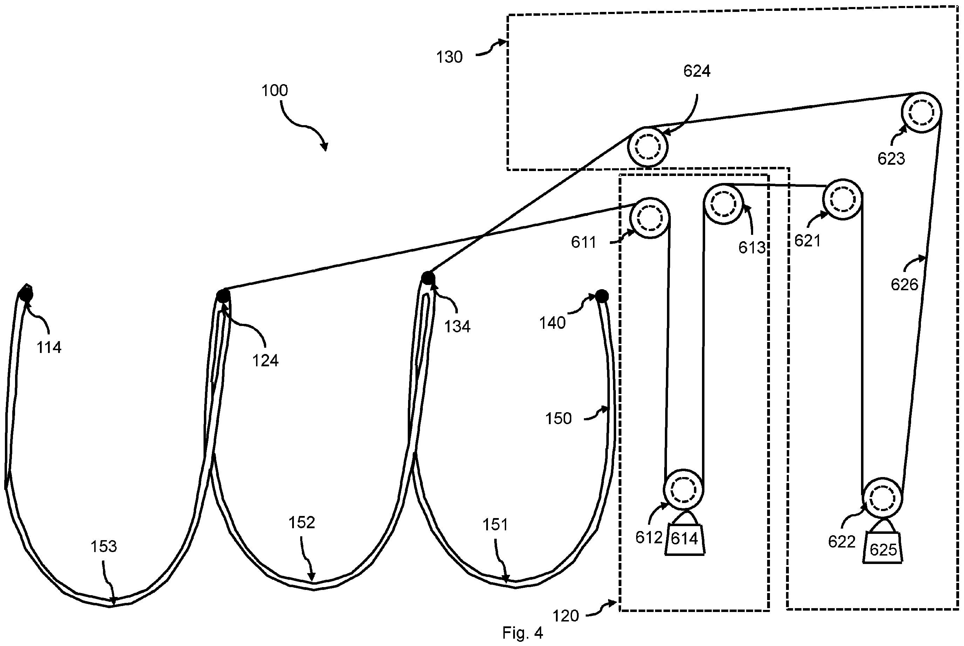

**Fig. 4** illustrates a cable handling arrangement 100 comprising one single line member 626, one or more weights 614, 625 and one or more guide members 611-613, 621-624 according to one or more embodiments of the present disclosure.

In other words, the resilient elements 120, 130 are implemented using line member 626, the one or more weights 614, 625 and one or more guide members 611-613, 621-624.

As can be seen from Fig.4, the user may use the cable handling arrangement 100 to extend the charging cable 150 away from the anchor point 140 of the cable, normally located at the charger and/or charging unit, by holding the charging cable, e.g., at the opposite end 114 of the cable 150where a charging gun/connector normally is mounted, and then move away from the anchor point 140. Further, the user may retract the charging cable to/towards the anchor point 140 of the cable, by moving towards the anchor point 140.

The charging cable 150 of the cable handling arrangement 100 is typically provided with at least an anchor attachment point 140, a first attachment point 134 and a second attachment point 124. The attachment points typically comprise clamps or any other suitable arrangement for attaching to the charging cable 150. The cable handling arrangement 100 further comprises at least two resilient elements/units, 120, 130.

The cable handling arrangement 100 comprises a first resilient element/unit 130, which is physically connected/coupled to and comprises a first weight 625, e.g., located at the charging station comprising the charger. The first resilient element 130 is further physically connected/coupled to the first attachment point 134. The first resilient element 130 may e.g., be connected/attached to the first weight 625 via the line member 626 and one or more guide elements 622 by using connection arrangements, e.g., clamps. The first resilient element 130 is in this embodiment connected to the first attachment point 134 via the one single line member 626 by using connection arrangements, such as clamps. In other words, one end of the one single line member 626 is coupled to the first attachment point 134.

A first cable loop 151 of the cable 150 is formed between the anchor attachment point 140 and the first attachment point 134.

The cable handling arrangement 100 further comprises a second resilient element/unit 120 which is physically connected/coupled to and comprises a second weight 614. The second resilient element/unit 120 is further physically connected/coupled to the second attachment point 124. The second resilient element 120 may e.g., be connected to the second weight 614 via the line member 626 and/or one or more guide elements 611-613, 621 optionally by connection arrangements, such as clamps and/or a wire. The second resilient element 120 may e.g., be connected to the second attachment point 124 via the one single line member 626 by connection arrangements, such as clamps. In other words, an opposite end of the one single line member 626 is coupled to the second attachment point 134.

A second cable loop 152 of the cable 150 is thereby formed between the first attachment point 134 and second attachment point 124.

It is understood that the first resilient element 130 may be placed in front of the second resilient element 120 or vise versa, without departing from the present disclosure.

In one embodiment, the first weight 625 is configured to balance a total weight of the first cable loop 151. The second weight 614 is configured to balance the weight of the second cable loop 152.

In one alternative embodiment, the first weight 625 is configured to be equal to the second weight 614.

By using a single line member 626, the first resilient element 130 and the second resilient element 120 are configured to be serially coupled to each other.

Typically, the charging cable 105 is electrically coupled to the charger at a first end 140, and at the opposite end 114 provided with, and electrically coupled to, a charging gun.

It is understood that the teaching of Fig. 4 can be extended to include one or more additional resilient elements and cable loops, in a similar manner to what is described in Fig. 2.

In one embodiment, the handling arrangement 100 wherein each of the first and second resilient elements 120, 130 comprises one or more line members, one or more weights and one or more guide members, wherein the line member each runs via at least one of the guide members.

In one embodiment, the handling arrangement comprises one single line member 626.The one single line member is running via the one or more guide members 611-613, 621-624. One end of the one single line member 626 is coupled to the first attachment point 144 and the opposite end of the one single line member 626 is coupled to the second attachment point 124.

In one embodiment, each of the first and second resilient elements 120, 130 comprises three or more guide members 611-613, 621,623, wherein at least one guide member 612, 622 is mounted relatively lower than the remaining two guide members 612-13, 622-23. The at least one guide member 612, 622 mounted relatively lower than the remaining two guide members is typically attached to the respective weight 614, 625.

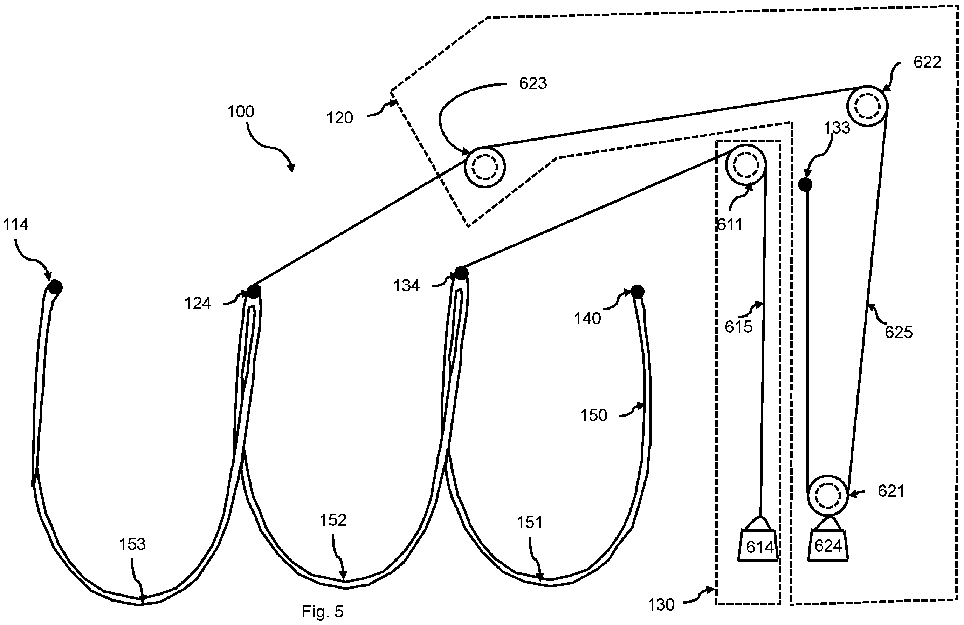

**Fig. 5** illustrates a cable handling arrangement 100 comprising one or more line members 615, 616, 625, 626, one or more weights 614, 624 and one or more guide members 611, 621, 622, 623, according to one or more embodiments of the present disclosure. In one embodiment, the cable handling arrangement 100 comprises a plurality of line members 615, 616, 625, 626, and a plurality of guide members 611, 621, 622, 623.

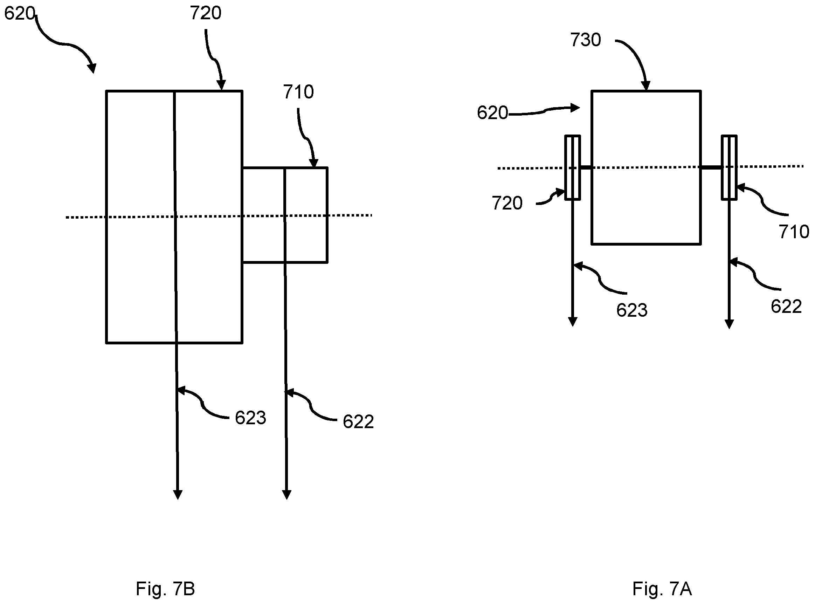

It is understood that the one or more line members 615, 616, 625, 626 may be continuous or sectioned in parts by a gear element, as described further in relation to Fig. 7. As can be seen from Fig.5, the user may use the cable handling arrangement 100 to extend the charging cable 150 away from the anchor point 140 of the cable, normally located at the charger and/or charging unit, by holding the charging cable, e.g., at the opposite end 114 of the cable where a charging gun/connector normally is mounted, and moving away from the anchor point 140. Further, the user may retract the charging cable to/towards the anchor point 140 of the cable, by moving towards the anchor point 140. The charging cable 150 of the cable handling arrangement 100 is typically provided with at least an anchor attachment point 140, a first attachment point 134 and a second attachment point 124. The attachment points typically comprise clamps or any other suitable arrangement for attaching to the charging cable 150. The cable handling arrangement 100 further comprises at least two resilient elements/units, 120, 130. The cable handling arrangement 100 comprises a first resilient element 130, which is physically connected/coupled to and comprises a first weight 614, e.g., located at the charging station comprising the charger. The first resilient element 130 is further physically connected/coupled to the first attachment point 134. The first resilient element 130 may e.g., be connected/attached to the first weight 614 by connection arrangements, e.g., clamps and/or a wire. The first resilient element 130 may e.g., be connected to the first attachment point 134 by connection arrangements, such as clamps.

A first cable loop 151 of the cable 150 is formed between the anchor attachment point 140 and the first attachment point 134.

The cable handling arrangement 100 further comprises a second resilient element/unit 120 which is physically connected/coupled to and comprises a second weight 624. The second resilient element/unit 120 is further physically connected/coupled to the second attachment point 124. The second resilient element 120 may e.g., be connected to the second weight 621 via a guide member 324 by connection arrangements, such as clamps and/or a wire. The second resilient element 120 may e.g., be connected to the second attachment point 124 by connection arrangements, such as clamps.

A second cable loop 152 of the cable 150 is thereby formed between the first attachment point 134 and second attachment point 124.

In one embodiment, the first weight 614 is configured to balance a total weight of the first cable loop 151. The second weight 624 is configured to balance the weight of the second cable loop 152.

Optionally, the first resilient element 130 and the second resilient element 120 are configured to be serially coupled to each other. This may e.g., be implemented by introducing an additional pulley attached to a common weight replacing the first and second weight.

In one embodiment, the first weight 614 is configured to be less/lighter than the second weight 624, e.g., the first weight 614 might be configured with half the weight of the second weight 624.

Typically, the charging cable is electrically coupled to the charger at a first end 140, and at the opposite end 114 provided with, and electrically coupled to, a charging gun.

It is understood that the teaching of Fig. 5 can be extended to one or more additional resilient elements and cable loops, in a similar manner to what is described in Fig. 2.

In one embodiment, the handling arrangement where the first resilient element 130 comprises a first single line member 615, wherein the first single line member 615 runs via one or more guide members 611 and is coupled at one end to a first weight 614 and at the opposite end to the first attachment point 134, wherein the second resilient element 120 comprises a second single line member 625, wherein the second single line member 625 runs via one or more guide members 621-623 and is coupled at one end to an anchor point 133 and coupled at the opposite end to the second attachment point 124.

Additionally or alternatively, the second resilient element 120 comprises two or more guide members 621, 622, wherein at least one guide member 621 is mounted relatively lower than the remaining guide member 622 and is coupled to the second weight 624.

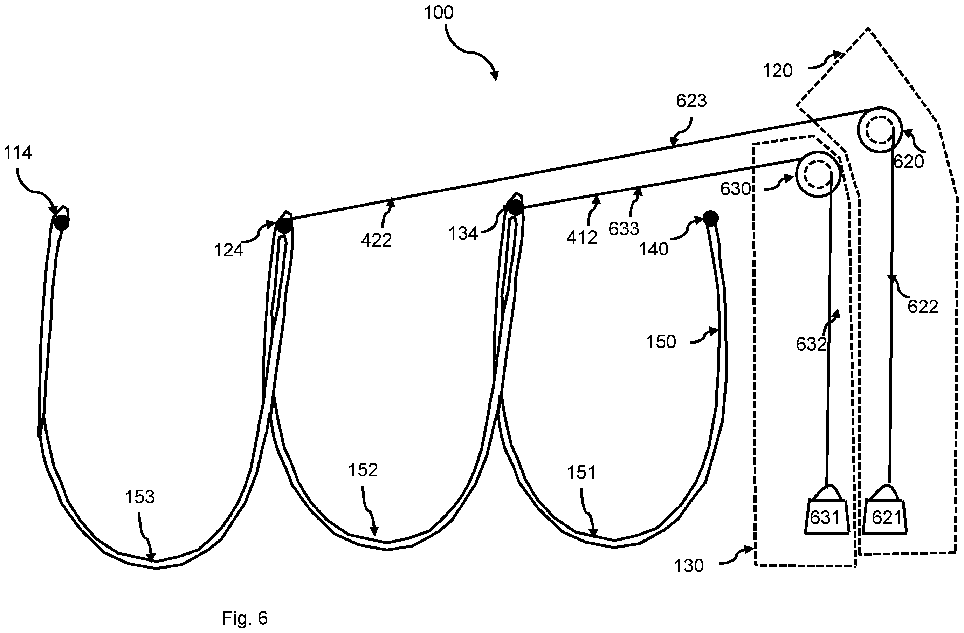

**Fig. 6** illustrates a cable handling arrangement comprising line members, weights and guide members according to one or more embodiments of the present disclosure. In one embodiment, at least one guide element is formed as a gear unit.

As can be seen from Fig.6, the user may use the cable handling arrangement 100 to extend the charging cable 150 away from the anchor point 140 of the cable, normally located at the charger and/or charging unit, by holding the charging cable, e.g., at the opposite end of the cable where a charging gun/connector normally is mounted, and moving away from the anchor point 140. Further, the user may retract the charging cable to/towards the anchor point 140 of the cable, by moving towards the anchor point 140.

The charging cable 150 of the cable handling arrangement 100 is typically provided with at least an anchor attachment point 140, a first attachment point 134 and a second attachment point 124. The attachment points typically comprise clamps or any other suitable arrangement for attaching to the charging cable 150. The cable handling arrangement 100 further comprises at least two resilient elements/units, 120, 130.

The cable handling arrangement 100 comprises a first resilient element 130, which is physically connected/coupled to and comprises a first weight 631, e.g., located at the charging station comprising the charger. The first resilient element 130 is further physically connected/coupled to the first attachment point 134. The first resilient element 130 may e.g., be connected/attached to the first weight 631 by connection arrangements, e.g., clamps and/or a wire. The first resilient element 130 may e.g., be connected to the first attachment point 134 by a string/wire extending from the resilient element and/or connection arrangements, such as clamps.

A first cable loop 151 of the cable 150 is formed between the anchor attachment point 140 and the first attachment point 134.

The cable handling arrangement 100 further comprises a second resilient element/unit 120 which is physically connected/coupled to and comprises a second weight 621. The second resilient element/unit 120 is further physically connected/coupled to the second attachment point 124. The second resilient element 120 may e.g., be connected to the second weight 621 by connection arrangements, such as clamps and/or a wire. The second resilient element 120 may e.g., be connected to the second attachment point 124 by a string/wire extending from the resilient element and/or connection arrangements, such as clamps.

A second cable loop 152 of the cable 150 is thereby formed between the first attachment point 134 and second attachment point 124.

In one embodiment, the first weight 631 is configured to balance a total weight of the first cable loop 151. The second weight 621 is configured to balance the weight of the second cable loop 152.

Optionally, the first resilient element 130 and the second resilient element 120 are configured to be serially coupled to each other. This may e.g., be implemented by introducing an additional pulley attached to a common weight replacing the first and second weight.

Typically, the charging cable is electrically coupled to the charger at a first end, and at the opposite end 114 provided with, and electrically coupled to, a charging gun.

It is understood that the teaching of Fig. 6 can be extended to one or more additional resilient elements, in a similar manner to what is described in Fig. 2.

In one embodiment, the first resilient element 130 comprises at least two line members 632, 633 and a first guide element 630 formed as a gear unit provided with a first guiding member, such as a drum or pulley, 710 configured to wind/unwind the first line member 632, coupled to the first weight 631, and provided with a second guiding member, such as a drum or pulley 720 configured to wind/unwind the second line member 633 coupled to the first attachment point 134, wherein the second resilient element 120 comprises a third and fourth line member 622, 623 and a second guide element 620 formed as a gear unit provided with a third guiding member, such as a drum or pulley, 710 configured to wind/unwind the third line member 622, coupled to the first weight 621, and provided with a second guiding member, such as a drum or pulley, 720 configured to wind/unwind the fourth line member 623 coupled to the second attachment point 124.

In Fig. 7A-B, an embodiment where two guide elements 620, 630 are formed as gear units are shown. In Fig.7A-B this is implemented by using two drums optionally having different diameter and being arranged adjacent along a common center line.

In one example, this means that a second line member 623 connected to an attachment point 124 and to the gear unit 620 can extend more than the first line member 622, as the second line member 623 is attached to a second drum/pulley 720 with a larger diameter than a first drum/pulley 710 to which the first line member 622 is attached to. In other words, as the circumference of the second drum/pulley is greater than the circumference of the first drum/pulley, a longer section of the corresponding line member will be extended.

Details on gear units are further provided in relation to Fig. 7A-B.

**Fig. 7A** illustrates a front view of the cable handling arrangement further comprising a gear unit according to one or more embodiments of the present disclosure.

In this embodiment, at least two of the one or more guide elements 620, 630 are comprising or formed as gear units and are provided with a first drum 710 or pulley configured to wind/unwind the first line member 622, 632 coupled to the respective weight 621, 631 and a second drum or pulley 720 configured to wind/unwind the second line member 623, 633 coupled to the respective attachment point 124, 134 of the charging cable 150. Alternatively, the gear units are provided with a second drum or pulley 720 configured to wind/unwind the first line member 622, 632 coupled to the respective weight 621, 631 and a first drum or pulley 710 configured to wind/unwind the second line member 623, 633 coupled to the respective attachment point 124, 134 of the charging cable 150.

The gear unit 620, 630 may comprise a planetary gear. The planetary gear comprising a housing 730, planet gear and a sun gear. In one embodiment, an outgoing axis of the planet gear is provided with the first drum or pulley 710 configured to wind/unwind the first line member 622, 632 coupled to the respective weight 621, 631. An outgoing axis of the sun gear is provided with the second drum 720 or pulley configured to wind/unwind the second line member 623, 633 coupled to the respective attachment point 124, 134 of the charging cable 150.

In one alternative embodiment, an outgoing axis of the planet gear is provided with the second drum or pulley 720 configured to wind/unwind the first line member 622, 632 coupled to the respective weight 621, 631. An outgoing axis of the sun gear is provided with the first drum or pulley 710 configured to wind/unwind the second line member 623, 633 coupled to the respective attachment point 124, 134 of the charging cable 150.

These configurations allow the second line member 623, 633 to extend and retract more than the first line member 622, 632, or vice versa. Thus, reducing the required mounting height of the two guide elements 620, 630 and therefore reducing the required height of the charging station holding the charging cable. In other words, the mounting height of the two guide elements 620, 630 do not need to correspond to the required range of extension and retraction of the charging station.

The handling arrangement according to claim 15, wherein the gear units 620, 630 each comprises a planetary gear, the planetary gear comprising a housing 730, a planet gear and a sun gear each provided with an outgoing axis.

In one embodiment, a first outgoing axis of the planet gear is provided with the first guide element/drum or pulley 710 and a second outgoing axis of the sun gear is provided with the second guide element/drum or pulley 720, or, wherein an first outgoing axis of the planet gear is provided with the second guide element/drum or pulley 720 and a second outgoing axis of the sun gear is provided with the first drum or pulley 710.

**Fig. 7B** illustrates a front view of the cable handling arrangement further comprising a gear unit according to one or more embodiments of the present disclosure. In this embodiment, at least two of the one or more guide elements 620, 630 are comprising or formed as gear units and are provided with a first drum or pulley configured to wind/unwind the first line member 622, 632 coupled to the respective weight 621, 631 and a second drum or pulley configured to wind/unwind the second line member 623, 633 coupled to the respective attachment point 124, 134 of the charging cable 150.

The gear unit 620, 630 may be configured with a common central axis for the first drum or pulley 710 and for the second drum or pulley 720. Optionally, the first drum or pulley 710 may be arranged adjacent to the second drum or pulley 720 along the common central axis.

Additionally, or alternatively, the first and second gear units 620, 630 are configured with a common central axis for the first drum or pulley 710 and for the second drum or pulley 720.

Additionally, or alternatively, the first drum or pulley 710 is configured with an outer diameter smaller than an outer diameter of the second drum or pulley 720.

In one embodiment, the first drum or pulley 710 is configured with an outer diameter smaller than an outer diameter of the second drum or pulley 720. In one example, the diameters are selected such that the circumference of the first drum or pulley 710 is half of the second drum or pulley 720.

Finally, it should be understood that the invention is not limited to the embodiments described above, but also relates to and incorporates all embodiments within the scope of the appended independent claims.

## Claims

1. A cable handling arrangement (100) configured to extend and retract a charging cable (150) for a vehicle from and to a charger, the handling arrangement (100) comprising:
a charging cable (150) configured to conduct charging current from a charger to the vehicle,
a first resilient element (130) attached to the cable (150) at a first attachment point (134), wherein a first cable loop (151) of the cable (150) is formed between an anchor attachment point (140) and the first attachment point (134),
a second resilient element (120) attached to the cable (150) at a second attachment point (124), wherein a second cable loop (152) of the cable (150) is formed between the first attachment point (134) and second attachment point (124).

2. The handling arrangement (100) according to claim 1, wherein the first resilient element (130) and the second resilient element (120) are serially coupled to each other

3. The handling arrangement (100) according to any of claim 1-2, wherein the first resilient element (130) and the second resilient element (120) is configured with the same balance weight rating.

4. The handling arrangement (100) according to claim 1-2, wherein the first resilient element (130) is configured with a greater balance weight rating than the second resilient element (120).

5. The handling arrangement (100) according to any of claims 1-4, wherein the first resilient element (130) is configured to balance a total weight of the first cable loop (151) and the second cable loop (152), and the second resilient element (120) is configured to balance the weight of the second cable loop (152).

6. The handling arrangement (100) according to any of claims 1-2, wherein the first resilient element (130) is configured with a lower balance weight rating than the second resilient element (120).

7. The handling arrangement (100) according to any of the preceding claims, further comprising one or more additional resilient elements (110).

8. The handling arrangement (100) according to claim 7, wherein the first resilient element (130), the second resilient element (120) and the one or more additional resilient elements (110) are serially coupled to each other.

9. The handling arrangement (100) according to any of the preceding claims, wherein the resilient element comprises a spring balancer.

10. The handling arrangement (100) according to any of the preceding claims, wherein the resilient element comprises a spring.

11. The handling arrangement (100) according to any of the preceding claims, wherein each of the first and second resilient element (120, 130) comprises one or more line members, one or more weights and one or more guide members, wherein the line member each runs via at least one of the guide members.

12. The handling arrangement according to claim 11, comprising one single line member (626), wherein the one single line member is running via the one or more guide members (611-613, 621-624), wherein one end of the one single line member (626) is coupled to the first attachment point (134) and the opposite end of the one single line member (626) is coupled to the second attachment point (124).

13. The handling arrangement according to claim 12, wherein each of the first and second resilient element (120, 130) comprises three or more guide members (611-613, 621-623), wherein at least one guide member (612, 622) is mounted relatively lower than the remaining two guide members (612-613, 622-623).

14. The handling arrangement (100) according to any claims 11-13, further comprising one or more additional resilient elements (110) with corresponding attachment points.

15. The handling arrangement according to claim 11, wherein the first resilient element (130) comprises a first single line member (615), wherein the first single line member (615) runs via one or more guide members (611) and is coupled at one end to a first weight (614) and at the opposite end to the first attachment point (134), wherein the second resilient element (120) comprises a second single line member (625), wherein the second single line member (625) runs via one or more guide members (621-623) and is coupled at one end to an anchor point (133) and coupled at the opposite end to the second attachment point (124).

16. The handling arrangement according to claim 15, wherein the second resilient element (120) comprises two or more guide members (621, 622), wherein at least one guide member (621) is mounted relatively lower than the remaining guide member (622) and is coupled to the second weight (624).

17. The handling arrangement (100) according to any claims 15-16, further comprising one or more additional resilient elements (110) with corresponding attachment points.

18. The handling arrangement according to claim 11, wherein the first resilient element (130) comprises at least two line members (632, 633) and a first guide element (630) formed as a gear unit provided with a first drum or pulley (710) configured to wind/unwind the first line member (632), coupled to the first weight 631, and provided with a second drum or pulley 720 configured to wind/unwind the second line member (633) coupled to the first attachment point (134), wherein the second resilient element (120) comprises a third and fourth line member (622, 623) and a second guide element (620) formed as a gear unit provided with a third drum or pulley (710) configured to wind/unwind the third line member (622), coupled to the first weight 621, and provided with a second drum or pulley (720) configured to wind/unwind the fourth line member (623) coupled to the second attachment point (124).

19. The handling arrangement according to claim 18, wherein the gear units (620, 630) each comprises a planetary gear, the planetary gear comprising a housing 730, a planet gear and a sun gear each provided with an outgoing axis.

20. The handling arrangement according to claim 19, wherein an first outgoing axis of the planet gear is provided with the first drum or pulley (710) and a second outgoing axis of the sun gear is provided with the second drum or pulley (720), or, wherein an first outgoing axis of the planet gear is provided with the second drum or pulley (720) and a second outgoing axis of the sun gear is provided with the first drum or pulley (710).

21. The handling arrangement according to claim 20, wherein the first and second gear units (620, 630) are configured with a common central axis for the first drum or pulley (710) and for the second drum or pulley (720).

22. The handling arrangement according to claim 21, wherein the first drum or pulley (710) is configured with an outer diameter smaller than an outer diameter of the second drum or pulley (720).

23. The handling arrangement (100) according to any claims 19-22, further comprising one or more additional resilient elements (110) with corresponding attachment points.

24. A charging system (300) comprising:
a vehicle (310) comprising an energy storage for receiving electric energy,
a charger (320) configured to charge the vehicle (310), the charger (320) being electrically coupled to the vehicle (310) by the handling arrangement (100) according to any of claims 1-20.
